(19) Europäisches Patentamt
European Patent Office
Office européen des brevets

(11) EP 4 756 802 A1

(12) **EUROPEAN PATENT APPLICATION**

(43) Date of publication:
10.06.2026  Bulletin 2026/24

(21) Application number: 25221758.3

(22) Date of filing: 09.12.2025

(51) International Patent Classification (IPC):
*G10L 21/0232* (2013.01)

(52) Cooperative Patent Classification (CPC):
G10L 21/0232

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.12.2024  PCT/CN2024/137910
03.04.2025  US 202563783004 P

(71) Applicant: Dolby Laboratories Licensing
Corporation
San Francisco, CA 94103 (US)

(72) Inventors:
• Dai, Jia
 Beijing, 100020 (CN)
• Li, Kai
 Beijing, 100020 (CN)

(74) Representative: Dolby International AB
Patent Group Europe
77 Sir John Rogerson's Quay
Block C
Grand Canal Docklands
Dublin, D02 VK60 (IE)

(54) **METHODS AND APPARATUS FOR DEEP LEARNING-BASED HIGH SAMPLE RATE SPEECH ENHANCEMENT**

(57)    Methods, apparatus, programs, and storage media for enhancing speech signals based on a neural network are provided. The method includes receiving a speech signal and a corresponding reference speech signal. A first set of band features is extracted from the speech signal and a second set of band features is extracted from the reference speech signal, wherein each feature in the first set of band features corresponds to a frequency band of the speech signal and each feature in the second set of band features corresponds to a frequency band of the reference speech signal. The first set of band features is split into a low frequency band part and high frequency band part. Band features corresponding to the high frequency band part are mapped to a reduced number of high frequency band features. The low frequency band part and the reduced number of high frequency band features are combined into a third set of band features. A first mask is determined by inputting the third set of band features into a speech enhancement neural subnetwork. The first mask is split into a low frequency mask part and high frequency mask part. Entries corresponding to the high frequency mask part are mapped to an increased number of entries. The low frequency mask part and the increased number of entries are combined into a second mask. A fourth set of band features is determined based on the second mask and the speech signal. A loss function is evaluated based on the second set of band features and the fourth set of band features. Weights of the speech enhancement neural subnetwork are updated based on a value of the evaluated loss function.

FIG. 1

**Description**

**CROSS-REFERENCE TO RELATED APPLICATIONS**

This application claims the benefit of priority from PCT Application No. PCT/CN2024/137910 filed on 9 December 2024, and U.S. Provisional Application No. 63/783,004, filed on 3 April 2025, each of which is incorporated by reference herein in its entirety.

**TECHNICAL FIELD**

The present disclosure relates to the enhancement of degraded speech signals and more particular to deep learning-based methods and devices for enhancing high sample rate speech.

**BACKGROUND**

An audio signal may be subjected to a mix of environment caused degradation, such as noise, echo reverberation, and processing related degradation, such as compression, transcoding and further processing steps before being listened to. This may result in a reduced listening experience for a user, as the audio quality of the played audio signal is not satisfactory. For example, a telephone conference service provider may find that there are significant degradations of audio quality before the audio signal is received by the telephone conference service. For example, a mobile phone conversation may often have GSM encoded voice before being received by the telephone conference service provider.

The audio signal may thus be referred to as a degraded audio or speech signal and enhancement of such a signal may advantageously be performed to reduce noise, reverberation and codec artefacts to improve the listening experience.

When speech enhancement is integrated at an endpoint before the audio signal is presented to a user, the apparatus performing speech enhancement may have no knowledge of the type of degradations in the received speech signal. For example, the speech enhancement method may have no knowledge about a previously applied compression of the speech signal. For this reason, speech enhancement systems with fixed settings may be unsuitable for enhancing the received speech signal. To improve speech enhancement in these scenarios, speech enhancement based on neural networks has gained popularity, as the neural network can be trained with speech comprising all types of degradation, and therefore provide an improved performance of speech enhancement in situations where the actual degradation is unknown to the enhancement method.

Training a neural network for enhancing speech with a high sample rate may however be challenging, as the complexity of the neural network may increase with the sample rate and speech training data with a high sample rate may be rare.

There is thus a need for further improvements in this context.

**SUMMARY**

In view of the above, the present disclosure provides methods, apparatus, and programs, as well as computer-readable storage media for neural network-based speech enhancement, having the features of the respective independent claims.

According to a first aspect of the disclosure, a method of training a neural network for speech enhancement is provided. A speech signal and a corresponding reference speech signal may be received. Further, a first set of band features may be extracted from the speech signal and a second set of band features may be extracted from the reference speech signal. Each feature in the first set of band features may correspond to a frequency band of the speech signal and each feature in the second set of band features may correspond to a frequency band of the reference speech signal. The first set of band features may be split into a low frequency band part and a high frequency band part. Band features corresponding to the high frequency band part may be mapped to a reduced number of high frequency band features. The low frequency band part and the reduced number of high frequency band features may be combined into a third set of band features. A first mask may be determined by inputting the third set of band features into a speech enhancement neural subnetwork. The first mask may be the output of the speech enhancement neural subnetwork. The first mask may be split into a low frequency mask part and a high frequency mask part. Entries corresponding to the high frequency mask part may be mapped to an increased number of entries. The low frequency mask part and the increased number of entries may be combined into a second mask. A fourth set of band features may be determined based on the second mask and the speech signal. A loss function may be evaluated based on the second set of band features and the fourth set of band features. Weights of the speech enhancement neural subnetwork may be updated based on a value of the evaluated loss function.

By estimating a mask for a band feature vector with a large amount of entries, i.e., band features corresponding to a speech signal with a high sampling rate, based on a feature reduction, a speech enhancement neural network for a band feature vector with a smaller amount of entries, and a feature increase, the complexity of the speech enhancement framework can be reduced, and training of said framework may be simplified.

In some embodiments, the speech enhancement neural subnetwork may be pretrained. The speech enhancement neural subnetwork may be initialized with weights resulting from the pertaining. Pretraining may be based on band features corresponding to a pretraining speech signal and a pretraining reference speech signal.

The number of band features corresponding to the pretraining speech signal and the pretraining reference speech signal is equal to the number of band features in the third set of band features. In other words, size of the pretraining band feature vectors may be equal to the size of the band feature vector after the number of features in the high frequency band part have been reduced.

By pretraining the speech enhancement neural subnetwork, i.e., training it with band features vectors corresponding to a speech signal with a low sample rate, weights of the speech enhancement neural subnetwork may be close to optimal when the complete speech enhancement framework, i.e., feature reduction, speech enhancement neural subnetwork and feature increase, is trained with band feature vectors corresponding to a high sample rate.

In some embodiments, splitting the first set of band features into a low frequency band part and high frequency band part may be performed by splitting the frequency bands at a splitting point and assigning the band features corresponding to the frequency bands below the splitting point to the low frequency band part and the band features corresponding to the frequency bands above the splitting point to the high frequency band part. The splitting point may be based on a difference between the number of band features in the first set of band features and the input size of the speech enhancement neural subnetwork. A number of band features in the low frequency band part may be equal to or smaller than N-1, wherein N is the input size of the speech enhancement neural subnetwork. N may be an integer larger than zero. A number of band features in the high frequency band part may be equal to M-x, wherein x may be the number of band features in the low frequency band part and M may be the total number of band features in the first set of band features. The reduced number of high frequency band features may be equal to N-x. M and x may be integers larger than zero.

In some embodiments, splitting the first set of band features into a low frequency band part and a high frequency band part may be based on a first neural subnetwork. The first neural subnetwork may be trained together with the speech enhancement neural subnetwork by evaluating the loss function.

In some embodiments, mapping the band features corresponding to the high frequency band part to the reduced number of high frequency band features may include, for each band feature in the reduced number of high frequency band features, determining a subset of band features in the high frequency band part, and calculating a weighted sum of the subset of band features to determine the band feature in the reduced number of high frequency band features. Mapping the band features corresponding to the high frequency band part to the reduced number of high frequency band features may be based on a second neural subnetwork. The second neural subnetwork may then be trained together with the speech enhancement neural subnetwork by evaluating the loss function. Weights of the second neural subnetwork may correspond to a choice of subsets and the weights for the weighted sum of the subsets. The second neural subnetwork may be a fully connected layer.

In some embodiments, splitting the first mask into the low frequency mask part and the high frequency mask part may be performed by splitting the entries at a splitting point and assigning the entries corresponding to the frequency bands below the splitting point to the low frequency mask part and the entries corresponding to the frequency band above the splitting point to the high frequency mask part. A number of entries in the low frequency mask part may correspond to a number of band features in the low frequency band part. Specifically, a number of entries in the high frequency mask part may be equal to N-x. Splitting the first mask into the low frequency mask part and the high frequency mask part may further be based on a third neural subnetwork. The third neural subnetwork may be trained together with the speech enhancement neural subnetwork by evaluating the loss function.

In some embodiments, mapping the entries corresponding to the high frequency mask part to the increased number of entries may include, for each entry in the increased number of entries, determining a subset of entries in the high frequency mask part, and calculating a weighted sum of the subset of entries to determine the entry in the increased number of entries. The increased number of entries may be equal to M-x. Further, mapping the entries corresponding to the high frequency mask part to the increased number of entries may be based on a fourth neural subnetwork. The fourth neural subnetwork may be trained together with the speech enhancement neural subnetwork by evaluating the loss function. Weights of the fourth neural subnetwork may correspond to a choice of subsets and the weights for the weighted sum of the subsets. The fourth neural subnetwork may be a fully connected layer.

In some embodiments, the speech signal may include speech that is degraded by one or more of noise, reverberation, compression and decompression.

In some embodiments, extracting the first set of band features from the speech signal and the second set of band features from the reference speech signal may include transforming the speech signal into the frequency domain to obtain a transformed speech signal, and transforming the reference speech signal into the frequency domain to obtain a transformed reference speech signal. It further includes, extracting a first feature from the transformed speech signal for each frequency bin in the frequency domain, and extracting a second feature from the transformed reference speech signal for each frequency bin in the frequency domain. Further, for each frequency band in the plurality of frequency bands, it includes combining first features corresponding to frequency bins inside the frequency band to obtain the first set of band features, and combining second features corresponding to frequency bins inside the frequency band to obtain the second set of band features. Combining first features corresponding to frequency bins inside a frequency band to obtain the first set of band features may include weighting the first features corresponding to frequency bins inside the frequency band. Analogously, combining first features corresponding to frequency bins inside a frequency band to obtain the first set of band features may include weighting the first features corresponding to frequency bins inside the frequency band. Width and spacing of frequency bands may be perceptually motivated. Specifically, frequency bands may be equally spaced in Mel frequency.

In some embodiments, transforming the speech signal or the reference speech signal into the frequency domain may be performed by any one of a short time Fourier transform, STFT, a modified discrete cosine transform, MDCT, a shifted discrete frequency transform, MDXT, or a filter bank based transform.

In some embodiments, each feature in the first set of band features and each feature in the second set of band features may be any one of a Mel-frequency band power, Bark Scale band power, log-frequency band power or equivalent rectangular bandwidth, ERB, band power.

In some embodiments, combining the low frequency band part and the reduced number of high frequency band features into the third set of band features may include stacking band features corresponding to the low frequency band part and band features corresponding to the reduced number of high frequency band features to generate the third set of band features In some embodiments, the speech enhancement neural subnetwork may be a deep neural network, DNN. The DNN may include a feature extraction module, followed by an encoder module, followed by a decoder module, followed by a CNN layer. The encoder module may include at least one down-sample layer and a plurality of CNN layers, and wherein the decoder module may comprise at least one up-sample layer and a plurality of CNN layers.

In some embodiments, the first and second mask may include a value indicating an amount of speech present in each frequency band of the corresponding speech signal. Specifically, the value indicating an amount of speech present in each frequency band of the corresponding speech signal may be a ratio of speech to speech plus noise in the respective frequency band. A number of entries in the first mask may be equal to N and a number of entries in the second mask may be equal to M.

In some embodiments, combining the low frequency mask part and the increased number of entries into the second mask may include stacking entries corresponding to the low frequency mask part and entries corresponding to the increased number of entries to generate the second mask.

In some embodiments, generating the second mask may further include smoothing the stacked entries. Smoothing the stacked entries may be performed by a smoothing neural subnetwork comprising a convolutional neural network, CNN layer, followed by a batch norm layer, followed by an activation layer. The smoothing neural subnetwork may be trained together with the speech enhancement neural subnetwork by evaluating the loss function.

In some embodiments, determining the fourth set of band features based on the second mask and the speech signal may include applying the second mask to the transformed speech signal and extracting the fourth set of band features from the transformed speech signal after the second mask has been applied. Applying the second mask to the transformed speech signal may include multiplying, for each frequency band, the value of the second mask with the transformed speech signal. Therefore, each feature in the fourth set of band features may correspond to a frequency band of the transformed speech signal with the second mask applied.

In some embodiments, the loss function may be based on a difference between the second set of features and the fourth set of features.

According to a second aspect of the disclosure, a neural network-based method for speech enhancement of a speech signal is provided. The speech signal may be received. Further, a first set of band features may be extracted from the speech signal and a second set of band features may be extracted from the reference speech signal. Each feature in the first set of band features may correspond to a frequency band of the speech signal and each feature in the second set of band features may correspond to a frequency band of the reference speech signal. The first set of band features may be split into a low frequency band part and a high frequency band part. Band features corresponding to the high frequency band part may be mapped to a reduced number of high frequency band features. The low frequency band part and the reduced number of high frequency band features may be combined into a third set of band features. A first mask may be determined by inputting the third set of band features into a trained speech enhancement neural subnetwork. The first mask may be the output of the trained speech enhancement neural subnetwork. The first mask may be split into a low frequency mask part and high frequency mask part. Entries corresponding to the high frequency mask part may be mapped to an increased number of entries. The low frequency mask part and the increased number of entries may be combined into a second mask. The second mask may be applied to the speech signal to generate an enhanced speech signal.

By estimating a mask for a band feature vector with a large amount of entries, i.e., band features corresponding to a speech signal with a high sampling rate, based on a feature reduction, a speech enhancement neural network for a band feature vector with a smaller amount of entries, and a feature increase, the complexity of the speech enhancement framework can be reduced.

In some embodiments, the trained speech enhancement neural subnetwork may have been trained separately with first training pairs with a size equal to a number of band features in the third set of band features and consecutively trained with second training pairs of a size equal to a number of band features in the first set of band features according to the first aspect.

In some embodiments, splitting the first set of band features into a low frequency band part and high frequency band part may be performed by splitting the frequency bands at a splitting point and assigning the band features corresponding to the frequency bands below the splitting point to the low frequency band part and the band features corresponding to the frequency bands above the splitting point to the high frequency band part. The splitting point may be based on a difference between the number of band features in the first set of band features and the input size of the trained speech enhancement neural subnetwork. A number of band features in the low frequency band part may be equal to or smaller than N-1, wherein N may be the input size of the trained speech enhancement neural subnetwork. N may be an integer larger than zero. A number of band features in the high frequency band part may be equal to M-x, wherein x may be the number of band features in the low frequency band part and M may be the total number of band features in the first set of band features. The reduced number of high frequency band features may be equal to N-x. M and x may be integers larger than zero.

In some embodiments, splitting the first set of band features into a low frequency band part and high frequency band part may be based on a trained first neural subnetwork.

In some embodiments, mapping the band features corresponding to the high frequency band part to the reduced number of high frequency band features may include, for each band feature in the reduced number of high frequency band features, determining a subset of band features in the high frequency band part, and calculating a weighted sum of the subset of band features to determine the band feature in the reduced number of high frequency band features. Mapping the band features corresponding to the high frequency band part to the reduced number of high frequency band features may be based on a trained second neural subnetwork. Weights of the trained second neural subnetwork may correspond to a choice of subsets and the weights for the weighted sum of the subsets. The trained second neural subnetwork may be a fully connected layer.

In some embodiments, splitting the first mask into the low frequency mask part and the high frequency mask part may be performed by splitting the entries at a splitting point and assigning the entries corresponding to the frequency bands below the splitting point to the low frequency mask part and the entries corresponding to the frequency band above the splitting point to the high frequency mask part. A number of entries in the low frequency mask part may correspond to a number of band features in the low frequency band part. Specifically, a number of entries in the high frequency mask part may be equal to N-x. Splitting the first mask into the low frequency mask part and the high frequency mask part may further be based on a trained third neural subnetwork.

In some embodiments, mapping the entries corresponding to the high frequency mask part to the increased number of entries may include, for each entry in the increased number of entries, determining a subset of entries in the high frequency mask part, and calculating a weighted sum of the subset of entries to determine the entry in the increased number of entries. The increased number of entries may be equal to M-x. Further, mapping the entries corresponding to the high frequency mask part to the increased number of entries may be based on a trained fourth neural subnetwork. Weights of the trained fourth neural subnetwork may correspond to a choice of subsets and the weights for the weighted sum of the subsets. The trained fourth neural subnetwork may be a fully connected layer.

In some embodiments, the speech signal may include speech that is degraded by one or more of noise, reverberation, compression and decompression.

In some embodiments, extracting the first set of band features from the speech signal may include transforming the speech signal into the frequency domain to obtain a transformed speech signal. It further includes, extracting a first feature from the transformed speech signal for each frequency bin in the frequency domain. Further, for each frequency band in the plurality of frequency bands, it includes combining first features corresponding to frequency bins inside the frequency band to obtain the first set of band features. Combining first features corresponding to frequency bins inside a frequency band to obtain the first set of band features may include weighting the first features corresponding to frequency bins inside the frequency band. Width and spacing of frequency bands may be perceptually motivated. Specifically, frequency bands may be equally spaced in Mel frequency.

In some embodiments, transforming the speech signal or the reference speech signal into the frequency domain may be performed by any one of a short time Fourier transform, STFT, a modified discrete cosine transform, MDCT, a shifted discrete frequency transform, MDXT, or a filter bank based transform.

In some embodiments, each feature in the first set of band features and each feature in the second set of band features may be any one of a Mel-frequency band power, Bark Scale band power, log-frequency band power or equivalent rectangular bandwidth, ERB, band power.

In some embodiments, combining the low frequency band part and the reduced number of high frequency band features into the third set of band features may include stacking band features corresponding to the low frequency band part and band features corresponding to the reduced number of high frequency band features to generate the third set of band features

In some embodiments, the trained speech enhancement neural subnetwork may be a deep neural network, DNN. The DNN may include a feature extraction module, followed by an encoder module, followed by a decoder module, followed by a CNN layer. The encoder module may include at least one down-sample layer and a plurality of CNN layers, and wherein the decoder module may comprise at least one up-sample layer and a plurality of CNN layers.

In some embodiments, the first and second mask may include a value indicating an amount of speech present in each frequency band of the corresponding speech signal. Specifically, the value indicating an amount of speech present in each frequency band of the corresponding speech signal may be a ratio of speech to speech plus noise in the respective frequency band. A number of entries in the first mask may be equal to N and a number of entries in the second mask may be equal to M.

In some embodiments, combining the low frequency mask part and the increased number of entries into the second mask may include stacking entries corresponding to the low frequency mask part and entries corresponding to the increased number of entries to generate the second mask.

In some embodiments, generating the second mask may further include smoothing the stacked entries. Smoothing the stacked entries may be performed by a smoothing neural subnetwork comprising a convolutional neural network, CNN layer, followed by a batch norm layer, followed by an activation layer. The smoothing neural subnetwork may be trained together with the speech enhancement neural subnetwork by evaluating the loss function.

In some embodiments, applying the second mask to the speech signal to generate the enhanced speech signal may include applying the second mask to the transformed speech signal. Applying the second mask to the transformed speech signal may include multiplying, for each frequency band, the value of the second mask with the transformed speech signal.

In some embodiments, wherein the method may be performed on a frame of the speech signal.

Aspects of the present disclosure may be implemented via an apparatus. The apparatus may include a processor and memory coupled to the processor. The processor may be adapted to carry out the method according to aspects and embodiments of the present disclosure.

Aspects of the present disclosure may be implemented via a program. When instructions of the program are executed by a processor, the processor may carry out aspects and embodiments of the present disclosure. A computer-readable storage medium may store the program. Such computer-readable storage media may include memory devices such as those described herein, including but not limited to random access memory (RAM) devices, read-only memory (ROM) devices, etc.. Accordingly, some innovative aspects of the subject matter described in this disclosure can be implemented via one or more computer-readable storage media having software stored thereon.

It will be appreciated that apparatus features and method steps may be interchanged in many ways. In particular, the details of the disclosed method(s) can be realized by the corresponding apparatus (or system), and vice versa, as the skilled person will appreciate. Moreover, any of the above statements made with respect to the method(s) are understood to likewise apply to the corresponding apparatus (or system), and vice versa.

## BRIEF DESCRIPTION OF DRAWINGS

Example embodiments of the disclosure are explained below with reference to the accompanying drawings, wherein

Fig. 1 schematically illustrates an example framework for training a neural network for speech enhancement according to embodiments of the disclosure,

Fig. 2 schematically illustrates an example feature reduction framework according to embodiments of the disclosure,

Fig. 3 schematically illustrates an example neural network for speech enhancement according to embodiments of the disclosure,

Fig. 4 schematically illustrates an example feature increase framework according to embodiments of the disclosure,

Fig. 5 is a flowchart illustrating an example of a process of training a neural network for speech enhancement according to embodiments of the disclosure,

Fig. 6 schematically illustrates an example framework for using a neural network for speech enhancement according to embodiments of the disclosure,

Fig. 7 is a flowchart illustrating an example of a process of using a neural network for speech enhancement according to embodiments of the disclosure.

## DETAILED DESCRIPTION

The Figures (Figs.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Speech enhancement targets the removal of multiple unwanted artifacts such as noise, reverberation, and compression, while preserving the original speech. Recently, deep neural networks (DNNs) have been successfully used in speech enhancement and DNN-based speech enhancement is becoming an attractive research area. A commonly used method for DNN-based speech enhancement is time-frequency masking. More specifically, the DNN-based models use spectrum band features of the speech signal as input and estimate a time-frequency mask which can be applied to the spectrum band features of the speech signal. Notably, the complexity of the DNN-based models depends on a sampling rate of the speech signals used for training and inference.

Sampling is the process of converting a continuous-time signal into a discrete-time signal by measuring its amplitude at uniform intervals. The rate at which these measurements, or samples, are taken is known as the sample rate (or sampling frequency), typically measured in Hertz (Hz). Choosing an appropriate sample rate is crucial for accurately capturing the nuances of speech while optimizing data storage and processing requirements. Speech signals have distinct characteristics that must be considered when selecting a sample rate. Human speech predominantly contains frequencies ranging from about 80 Hz to 4 kHz, with most energy concentrated below 1 kHz. According to the Nyquist-Shannon sampling theorem, to accurately reconstruct a signal, the sample rate must be at least twice the highest frequency present in the signal. For speech, this would suggest a minimum sample rate of 8 kHz. However, higher sample rates are often used to ensure better fidelity and to capture additional nuances. For example, a sample rate of 48 kHz may be used for high quality audio or in a professional environment.

Determining a DNN-based speech enhancement model for speech with a sample rate of 48 kHz has however two challenges. As previously mentioned, complexity of the DNN-based speech enhancement model may increase with the sample rate. Therefore, a DNN-based model for 48 kHz may be far more complex than a 32 kHz model, for example. Therefore, both training and inference may consume more time. Secondly, a large number of training samples may be available for lower sampling rates, as speech with lower sampling rates is far more common. Therefore, a lack of sufficient training samples for high sample rates may lead to suboptimal training of the DNN.

The invention aims to overcome these problems by using well known und well trained DNN models for lower sampling rate speech together with a framework of feature reduction and increase to train the low sampling rate DNN model for speech with higher sampling rates.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

*Training*

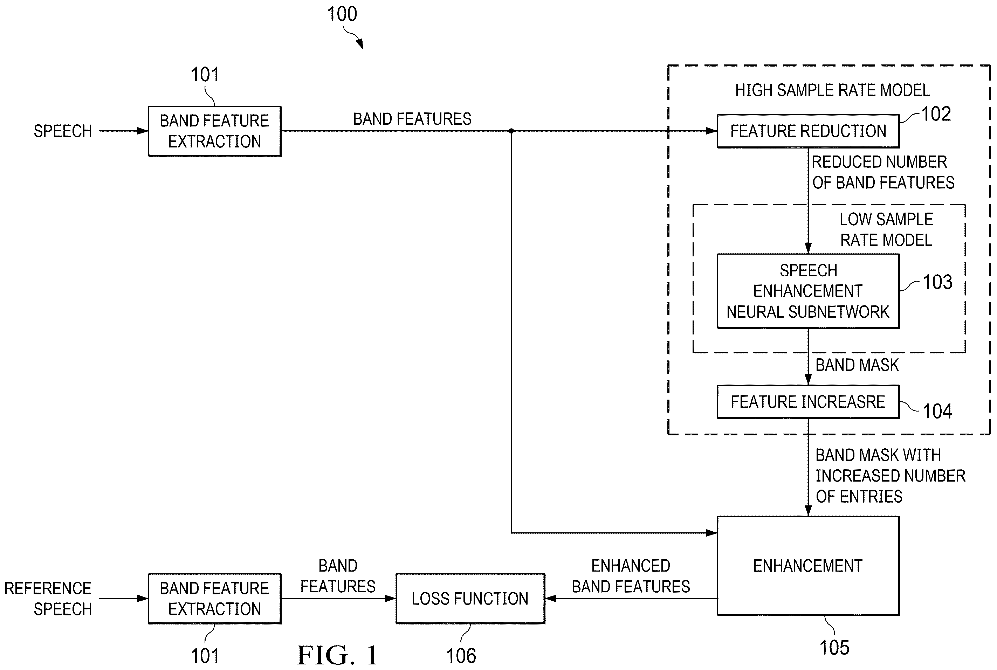

**Fig. 1** depicts an example framework 100 for training a neural network for speech enhancement according to some embodiments.

The training of the neural network is based on a pair of a clean/reference speech signal and a degraded speech signal. The degraded speech signal may be generated based on the reference speech signal. The generation of the degraded speech signal may be based on artificial degradation of the speech signal, e.g. adding a noise floor to the speech signal, or/and may be based on a real degradation due to a system transmission chain.

In case of an artificial degradation, the degraded audio speech may be generated from the clean audio speech in a degraded audio creator. The degraded audio may be part of a same device as the device for speech enhancement, or may be a device separate from the device for speech enhancement and wired or wirelessly connected to the device for speech enhancement.

The degraded audio creator may be seen as embodying a plurality of simulated transcoding chains. The degraded audio creator receives the clean speech signal and outputs one or more degraded speech signals. Advantageously, one clean speech may result in a plurality of cleandegraded audio speech pairs, where the input speech signal is part of each pair, and where the degraded speech signal in each pair comprises different types of artefacts.

Each simulated transcoding chain in the degraded speech creator contains a series of codecs and filters. For example, the generation of the degraded speech signal may comprise applying at least one codec (e.g. a voice codec) to the clean speech signal. The generation of the degraded speech signal may alternatively or additionally comprise applying an Intermediate Reference System, IRS, filter to the clean speech signal. The generation of the degraded speech signal may alternatively or additionally comprise applying a low pass filter to the clean speech signal.

Below follow 11 examples of transcoding chains which have been proved advantageous for training a neural network as described herein. The details of the 11 transcoding chains are:

(1) Low pass filter & IRS8 AMR-NB (5.1 ) G.711 VSV 1,

(2) Low pass filter & IRS8 AMR-NB (12.20) G.711,

(3) Low pass filter & IRS8 G.729 G.729 (delayed by 12 samples) G.71 1 VSV,

(4) Low pass filter & IRS8 dynamic range compression Opus Narrowband (6 Kbps) G.71 1 VSV,

(5) Low pass filter & IRS8 Opus Narrowband (6 kbps) AMR- NB (6.70) G.71 1 VSV,

(6) Low pass filter & IRS8 dynamic range compression AMR- NB (6.70) G.71 1 VSV,

(7) Low pass filter & IRS8 AMR-NB (5.1 ) MNRU G.71 1 VSV (MOS = 3.0),

(8) Low pass filter & IRS8 AMR-NB (5.1 ) MNRU G.71 1 VSV (MOS = 2.5),

(9) Low pass filter & IRS8 CVSD dynamic range compression AMR-NB G.71 1 (Simulating GSM mobile on Bluetooth) VSV,

(10) Low pass filter & IRS8 iLBC G.71 1 (simulating iLBC SIP truck) VSV,

(11) Low pass filter & IRS8 speex G.71 1 (simulating speex SIP truck) VSV.

The degraded speech signals outputted from the 11 transcoding chains may further be convolved with a narrow band impulse response before being used for training the neural network to simulate reverberations. The dynamic range compression may be performed by any suitable compressor, depending on the context and requirements.

For real degradation, a reference speech signal may be a signal recorded under optimal conditions, and the degraded speech signal may be the same signal, but recorded with a less capable microphone and may be processed for delivery over a network, such as a wireless network. The processing may include compression and decompression. The compression may be a lossy compression, i.e., the compression may remove content of the audio signal that cannot be regenerated by decompression.

Both reference speech and degraded speech may be speech signals with a high sampling rate, e.g. above 32 kHz.

Both the reference speech and the corresponding degraded speech are then each processed by a band feature extraction module 101. They may be processed sequentially by the same band feature extraction module 101 or may be processed by the same or a different band feature extraction module 101 in parallel. Both speech signals may be processed on a frame-by-frame basis, i.e., the framework 100 may operate on a single frame of the input audio signals. The band feature extraction module 101 may processes the input audio signal to determine a feature for each frequency band of the input audio signal. The number of frequency bands may depend on a sampling rate of the reference speech and the corresponding degraded speech.

Determining the band features by band feature extraction module 101 may comprise the determination of bin features and grouping said bin features to band features.

The bin feature determination may comprise determining the complex spectrum value for each frequency bin.

To determine the bin features for both speech signals, the signals may have to be transformed into the frequency domain. Any suitable discrete frequency transform (Fourier transform, Wavelet transform, etc.,) may be employed. Advantageous examples comprise a short time Fourier transform, SFTF, a modified discrete cosine transform, MDCT, a shifted discrete frequency transform, MDXT, and a filter bank transform. A reason for using MDXT instead of MDCT or DFT is that it provides both the energy compaction property of the MDCT and the phase information similar to DFT.

The process of grouping the bin features may be as follows:

The spectrum may first be divided into a number of frequency bands. The frequency bands may be determined such that each band comprise a same number of bins (such as 100, 160, 200, 320, etc., bins). Alternatively, the frequency bands may each comprise a different number of bands.

For example, the width and distribution of the bands may be motivated by Mel-frequency bands, Bark scale frequency bands, or log-frequency bands.

Then, for each frequency band, frequency features corresponding to the bins of the frequency band are combined into a feature corresponding to the frequency band. The feature corresponding to a band may be the power or another measure of energy of the respective band.

In some embodiments, the combining of bin features into a band feature may comprise weighting the bin features with different weights.

In a next step, the band features of the degraded speech are input to feature reduction module 102 to reduce the number of band features to a size that is expected by speech enhancement neural subnetwork 103.

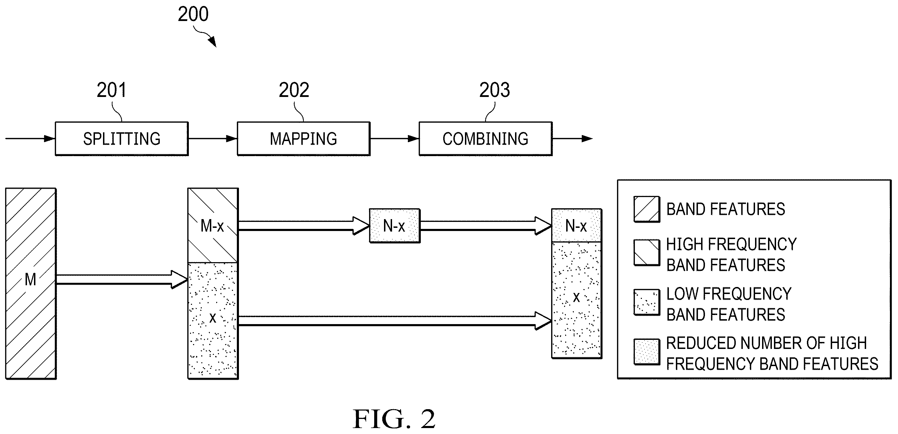

An example for feature reduction module 102 may be schematically illustrated in **Fig. 2** as feature reduction framework 200 according to embodiments of the disclosure. The number of band features of the degraded speech is assumed to be $M$. $M$ may be larger than an expected input size $N$ of speech enhancement neural subnetwork 103.

Feature reduction framework 200 may include a splitting module 201 for splitting $M$ band features into a low frequency band part and a high frequency band. The splitting ratio/splitting point may be based on a ratio between the input size, i.e., the number of band features *M*, and the input size of neural subnetwork 103, i.e., *N*. The splitting ratio/splitting point may be fixed or may be learnable, i.e., splitting module 201 may comprise a neural subnetwork for determining the splitting ratio/splitting point. The neural subnetwork of splitting module 201 may be trained together with speech enhancement neural subnetwork 103. The output of splitting module 201 may then be the low frequency band part with x band features and the high frequency band part with *M - x* band features.

The output of splitting module 201 may then be the input of mapping module 202. Mapping module 202 may map the *M - x* band features of the high frequency band part to a reduced number of band features. As the input size of the speech enhancement neural subnetwork 103 may be *N,* the total number of band features may need to match this number. To achieve this, mapping module 202 may map the M - *x* band features of the high frequency band part to *N - x* band features. The mapping process may be achieved by determining a weighted sum of a subset of the *M - x* band features to determine each of the *N - x* band features. The determination of the weights and the subset for the weighted sum may be fixed, e.g., by using a moving average or moving weighted average. Alternatively, the weights and the subsets for determining each of the *N - x* band features may be learnable, i.e., mapping module 202 may comprise a neural subnetwork for determining the weights and the corresponding subset of band features. The neural subnetwork of mapping module 202 may be a fully connected layer and may be trained together with speech enhancement neural subnetwork 103. The output of mapping module 201 may then be the reduced number of high frequency band features, i.e., *N - x* band features.

The output of mapping module 202 may then be the input of combining module 203. Combining module 203 may combine the original x band features of the low frequency band part and the *N - x* band features. Combining may be understood as stacking the original x band features of the low frequency band part and the *N - x* band features, e.g., stacking the respective values in a single vector. The output of combining module 201 may then be the total number of reduced band features, i.e., *N* band features. Therefore, feature reduction framework 200 may output *N* band features.

Returning back to Fig. **1,** when feature reduction module 102 is implemented as feature reduction framework 200, *M* band features may be reduced to *N* band features.

In a next step, the *N* band features may be the input to speech enhancement neural subnetwork 103. Speech enhancement neural subnetwork 103 may advantageously be a DNN. The DNN may be any suitable DNN for mask-based speech enhancement with the appropriate input size, e.g. *N.*

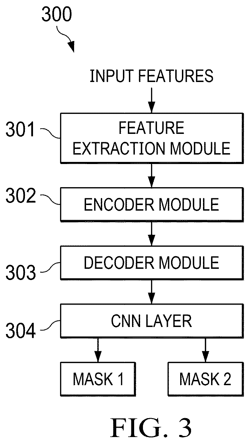

An example DNN for speech enhancement is depicted in **Fig. 3.** In this figure, the structure of a LensNet 300 DNN is depicted, for which an output mask, i.e., a mask to be applied to band or bin features, has the same size as the input features. The general structure of Lens-Net 300 will be briefly explained. The LensNet 300 model structure includes a feature extraction module 301, an encoder module 302, a decoder module 303 and a final CNN layer 304. The encoder module 302 may have one or more down sample layers and other CNN layers. The decoder module 303 may have one or more up-sample layers and other CNN layers. The output of the final CNN layer 304 may be a mask or multiple masks. The mask may have the same resolution as the input features. In other words, if the input features are the band features, the output mask may have a value corresponding to each frequency band.

Speech enhancement neural subnetwork 103 may be pretrained. In particular, speech enhancement neural subnetwork 103 may be pretrained based on training samples with a low sample rate, i.e., a sample rate corresponding to N band features. For example, for a sample rate of 32 kHz, a corresponding band feature vector may comprise 32 values. The training samples may be a pair of clean speech and corresponding degraded speech. Speech enhancement neural subnetwork 103 may also be referred to as low sample rate model for the purpose of this disclosure. Speech enhancement neural subnetwork 103 may output a mask with N values, i.e., a value for each band feature.

The values of the mask may each be a ratio of speech to speech plus noise. In this context, noise is understood as any degradation that adversely affects the speech signal, and speech is understood as the speech signal without these degradations. The ratio may be determined by considering the power of the speech signal and the noise signal. Therefore, the value of the ratio will be 1, if there is no noise in the speech input signal, and will approach 0, when there is almost no speech, but many degradations in the input speech signal.

In a next step, the mask output by speech enhancement neural subnetwork 103 may be the input of feature increase module 104. feature increase module 104 may have the inverse functionality of feature reduction module 102, i.e., it increases the number of values in the mask output by speech enhancement neural subnetwork 103 such that the number of values in the mask matches the number of band features output by band feature extraction module 101, i.e., *M* values.

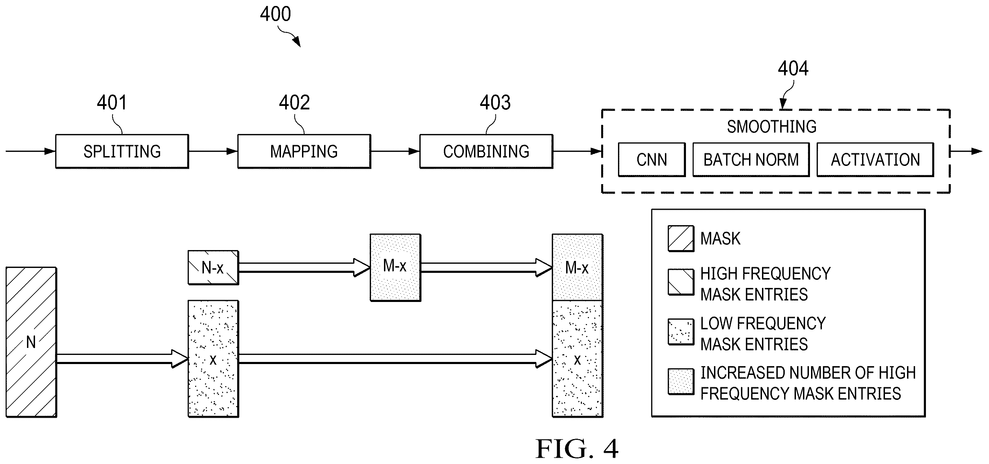

An example for feature increase module 104 may be schematically illustrated in **Fig. 4** as feature increase framework 400 according to embodiments of the disclosure.

Feature increase framework 400 may include a splitting module 401 for splitting *N* values of the mask into a low frequency mask part and a high frequency mask part. The splitting ratio/splitting point may be based on a ratio between the number of values in the Mask, i.e., *N,* and the number of band features output by band feature extraction module 101, i.e., *M*. In other words, the splitting ratio/splitting point may be chosen such that the number of values in the low frequency mask part may be equal to the number of band features in the low frequency band part, i.e., *x*. The splitting ratio/splitting point may be fixed or may be learnable, i.e., splitting module 401 may comprise a neural subnetwork for determining the splitting ratio/splitting point. The neural subnetwork of splitting module 401 may be trained together with speech enhancement neural subnetwork 103. Further, the neural subnetwork of splitting module 401 may be trained together with the neural subnetwork of splitting module 201 such that the number of values in the low frequency mask part may be equal to the number of band features in the low frequency band part. The output of splitting module 401 may then be the low frequency mask part with x band features and the high frequency mask part with *N - x* band features.

The output of splitting module 401 may then be the input of mapping module 402. Mapping module 402 may map the *N - x* values of the high frequency mask part to an increased number of values. As the output size of the band feature extraction module 101 may be *M*, the total number of values may need to match this number such that the mask can be applies to the band features. To achieve this, mapping module 402 may map the *N - x* values of the high frequency mask part to M - *x* values. The mapping process may be achieved by determining a weighted sum of a subset of the *N - x* values to determine each of the M - *x* band features. The determination of the weights and the subset for the weighted sum may be fixed, e.g., by using a moving average or moving weighted average. Alternatively, the weights and the subsets for determining each of the *M - x* values may be learnable, i.e., mapping module 402 may comprise a neural subnetwork for determining the weights and the corresponding subset of values. The neural subnetwork of mapping module 402 may be a fully connected layer and may be trained together with speech enhancement neural subnetwork 103. The weighted sum operation may correspond to an inverse of the mapping operation of mapping module 202. The output of mapping module 402 may then be the increased number of high frequency values, i.e., *M - x* values.

The output of mapping module 402 may then be the input of combining module 403. Combining module 403 may combine the original x values of the low frequency mask part and the M - *x* values. Combining may be understood as stacking the original x values of the low frequency mask part and the M - *x* values, e.g., stacking the respective values in a single vector. The output of combining module 403 may then be the increased total number of mask values, i.e., M values. Therefore, feature reduction framework 400 may output M mask values.

Optionally, feature reduction framework 400 may comprise smoothing module 404. Smoothing module 404 may smooth the M mask values. The smoothing process may be implemented as a neural subnetwork comprising a CNN layer, followed by a batch norm layer, followed by an activation layer. The neural subnetwork of smoothing module 404 may be trained together with speech enhancement neural subnetwork 103. Smoothing module 404 may output *M* smoothed mask values.

Returning back to Fig. **1,** when feature increase module 104 is implemented as feature increase framework 400, *N* mask values may be increased to *M* mask values.

The new mask with *M* values may then be the input of enhancement module 105. Additionally, a second input to enhancement module 105 may the band features corresponding to the speech signal with degradations, i.e., the output of band feature extraction module 101. The mask may then be applied to the band features to generate enhanced band features. Applying the mask to the band features may include the multiplication of each value of the mask with each corresponding band feature. The band feature may be the complex values of each frequency band. The enhanced band features may therefore also correspond to complex values of each frequency band.

As the aim of framework 100 is an output speech signal as close as possible to the reference/clean speech signal, in a final step the enhanced band features output by enhancement module 105, and the band features of the reference/clean speech signal may have to be compared. The comparison may be performed by a loss function 106. Any suitable loss function may be used to evaluate the performance of the speech enhancement, such as the mean square error (MSE). Advantageously, a hybrid loss function may be employed to further improve the performance of the speech enhancement system. The hybrid loss function may be a loss function that combines an MSE loss function with a perceptual loss function.

In one example, the hybrid loss function may be defined as follows:

$$Loss = Loss_m + \beta * Loss_c$$

$$Loss_m = m^{diff} - diff - 1$$

$$diff = |S|^p - \left|\hat{S}\right|^p$$

$$Loss_c = \left|\left|S\right|^p e^{j\varphi(S)} - \left|\hat{S}\right|^p e^{j\varphi(\hat{S})}\right|^2$$

Where $Loss_m$ is the perceptual loss function in the magnitude spectrum domain, $Loss_c$ is the MSE loss function in the complex spectrum domain, $\beta$ is the weighting coefficient between the magnitude spectrum domain loss and the complex spectrum domain loss, m is the tuning parameter that controls the shape of the asymmetric penalty, *S* and *Ŝ* are the reference (i.e., clean) spectrum and the estimated spectrum, respectively, $p$ is a spectral compression factor, and operator $\varphi$ calculates the argument of a complex number. For example, $\beta$ may be in the range of 0.8 to 1.2, m may be in the range of 2.73 to 2.75, and p may be in the range of 0.3 to 0.35.

As previously mentioned, the speech enhancement neural subnetwork 103 is a low sample rate model that is pretrained. In other words, for training of the high sample rate model, i.e., the combination of feature reduction module 102, speech enhancement neural subnetwork 103 and feature increase model 104, weights of the speech enhancement neural subnetwork 103 may be initialized with a final result of a pertaining of speech enhancement neural subnetwork 103 with the low sample rate training pairs. Therefore, training of the high sample rate model may converge relatively fast, as initial weights of speech enhancement neural subnetwork 103 may already be close to an optimal value. It should be noted that training of the high sample rate model may be understood as the combined training of all neural subnetworks included in any of feature reduction module 102, speech enhancement neural subnetwork 103 and feature increase model 104.

To train the high sample rate model, the result of the loss function will be evaluated. Evaluation may be performed on the result of the loss function over multiple pairs of reference/clean speech and degraded speech and over multiple frames of the respective pairs. The pairs should ideally capture a large variety of speech, e.g., gender, age etc., and a large variety of degradations for each clean speech sample. In other words, for each sample of clean speech, multiple samples of degradations of this specific speech sample may be provided.

Depending on the evaluation result, weights of the neural subnetworks may be updated. The neural subnetworks may be trained until the result of the loss function reaches a threshold or until the result of the loss function does not decrease substantially anymore.

In summary, by using framework 100, a low complexity DNN based high sample rate model for speech enhancement may be trained efficiently, with a low number of training samples.

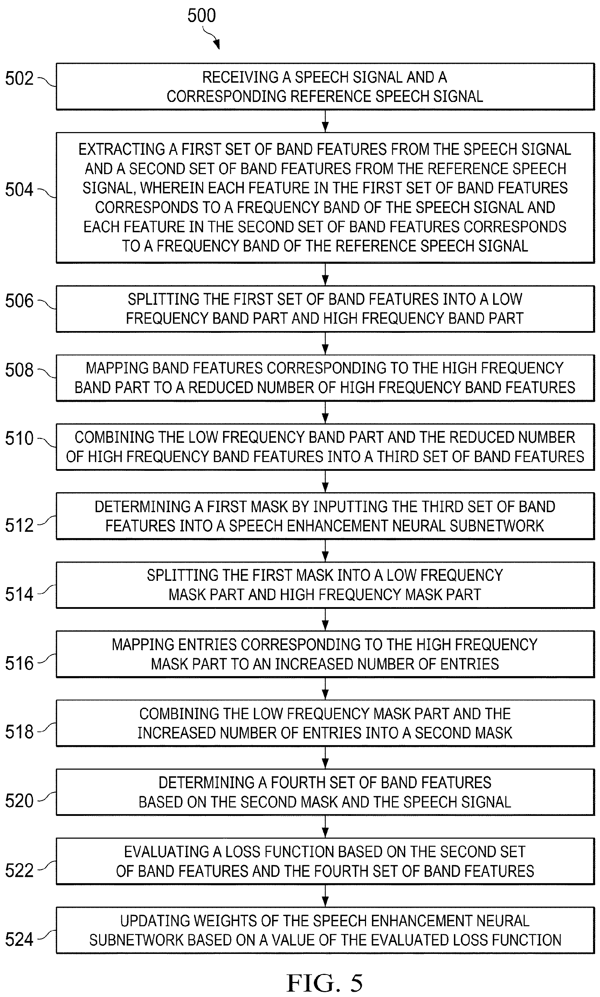

**Fig. 5** is a flowchart of an example of a process 500 of training a neural network for speech enhancement according to embodiments of the disclosure. Process 500 may correspond to the steps performed according to training of the speech enhancement framework 100 in **Fig. 1.** In some implementations, blocks of process 500 may be performed by a speech enhancement device. Alternatively, blocks of process 500 may be performed by another device, and the parameters for the trained neural network are provided to the speech enhancement device.

In S502, process 500 may receive a speech signal and a corresponding reference speech signal. The speech signal may be generated from the reference speech signal by degrading the speech signal.

In S504, process 500 may extract a first set of band features from the speech signal and a second set of band features from the reference speech signal, wherein each feature in the first set of band features corresponds to a frequency band of the speech signal and each feature in the second set of band features corresponds to a frequency band of the reference speech signal. To extract the band features, the speech signal and the reference signal may have to be transformed into the frequency domain. The features in the first set of band features and in the second set of band features may correspond to the complex spectrum values of a corresponding frequency band for the speech signal and the reference speech signal, respectively. The band features may be determined based on grouping bin features of the speech signal and the reference speech signal.

In S506, process 500 may split the first set of band features into a low frequency band part and high frequency band part.

In S508, process 500 may map band features corresponding to the high frequency band part to a reduced number of high frequency band features. Mapping may be implemented as a weighted sum of subsets of band features in the high frequency band part. The weighted sum of subsets may be learnable, i.e., a neural network is used to determine the corresponding weights.

In S510, process 500 may combine the low frequency band part and the reduced number of high frequency band features into a third set of band features.

In S512, process 500 may determine a first mask by inputting the third set of band features into a speech enhancement neural subnetwork. The first mask may be the output of the speech enhancement neural subnetwork.

In S514, process 500 may split the first mask into a low frequency mask part and high frequency mask part.

In S516, process 500 may map entries corresponding to the high frequency mask part to an increased number of entries. Mapping may be implemented as a weighted sum of subsets of band features in the high frequency band part. The weighted sum of subsets may be learnable, i.e., a neural network is used to determine the corresponding weights.

In S518, process 500 may combine the low frequency mask part and the increased number of entries into a second mask.

In S520, process 500 may determine a fourth set of band features based on the second mask and the speech signal. To determine the fourth set of band features, the second mask may be applied to frequency transformed version of the speech signal, i.e., by multiplying the bands of the frequency transformed speech signal with the respective value of the second mask.

In S522, process 500 may evaluate a loss function based on the second set of band features and the fourth set of band features. In other words, a loss function may be calculated to compare the second set of band features and the fourth set of band features. The loss function may be any suitable loss function, e.g., a hybrid loss function comprising an MSE loss function and a perceptually motivated loss function.

In S524, process 500 may update weights of the speech enhancement neural subnetwork based on a value of the evaluated loss function. Updating the weights may be based on any suitable optimizer for neural networks, e.g., gradient decent or Adam. Weights may be updated until a stop criterion is reached, e.g., a specific loss value or a maximum number of steps.

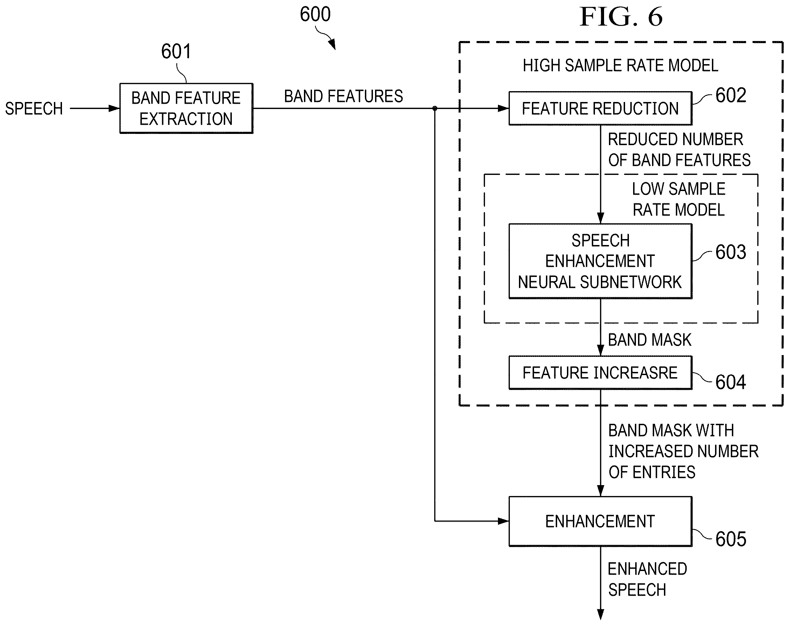

After training of the speech enhancement framework, the speech enhancement framework may be used for enhancing speech. **Fig. 6** schematically illustrates an example framework 600 for using the neural network for speech enhancement according to embodiments of the disclosure. Certain modules in **Fig. 6** may be identical to modules in in **Fig. 1.** For a detailed explanation of these modules, it is referred to the embodiment corresponding to **Fig. 1.**

A speech signal may be the input of band feature extraction module 601. The speech signal may be degraded due to suboptimal recording devices and/or suboptimal conditions for recording the speech signal, e.g., background noise. The speech signal may further be degraded due to the transmission of the speech signal to a receiving device, e.g., the speech signal may be degraded by a lossy compression or by compression artifacts. Functionality of band feature extraction module 601 may be identical to functionality of band feature extraction module 101.

Band feature extraction module 601 may output band features of the speech signal. The number of band features is then reduced by feature reduction module 602. Functionality of feature reduction module 602 may be identical to functionality of feature reduction module 102. If feature reduction module 602 comprises neural subnetworks, weights of these neural subnetworks are assumed to be optimal. In other words, weights of the neural subnetworks in feature reduction module 602 correspond to trained weights of the neural subnetworks in feature reduction module 102.

The reduced number of band features are input to speech enhancement neural subnetwork 603. Speech enhancement neural subnetwork 603 may have the same structure as speech enhancement neural subnetwork 103, i.e., it may be a DNN, and preferably structured as depicted in **Fig. 3.** Speech enhancement neural subnetwork 603 may be a trained version of speech enhancement neural subnetwork 103, i.e., the weights of speech enhancement neural subnetwork 603 have been optimized for speech enhancement based on training data. The training data may be pairs of clean speech and degraded speech. Speech enhancement neural subnetwork 603 may output a mask for enhancement of the speech signal.

The number of values is then increased by feature increase module 604. Functionality of feature increase module 604 may be identical to functionality of feature increase module 104. If feature increase module 604 comprises neural subnetworks, weights of these neural subnetworks are assumed to be optimal. In other words, weights of the neural subnetworks in feature increase module 604 correspond to trained weights of the neural subnetworks in feature increase module 104.

The mask and the band features may be the input of enhancement module 605. Enhancement module 605 has the same functionality as enhancement module 105. Therefore, enhancement module 605 may output enhanced band features. The enhanced band features may correspond to an enhanced version of the input speech signal. To generate the enhanced speech signal, enhancement module 605 may further perform an inverse frequency transform, corresponding to the frequency transform performed in band feature extraction module 601. The output of enhancement module 605 may then be the enhanced speech signal in the time domain. Framework 600 may operate on a single frame of the input speech signal, or on multiple consecutive frames at the same time. The number of consecutive frames may depend on a content of the speech signal. Further, the number of consecutive frames may be chosen such that the introduced delay introduced by the speech enhancement may not be noticeable by users of the speech enhancement system in a real-time application. The maximum delay for a real-time application may be in the range of 10 to 80 ms. The corresponding number of consecutive frames may be in the range of 2 to 4.

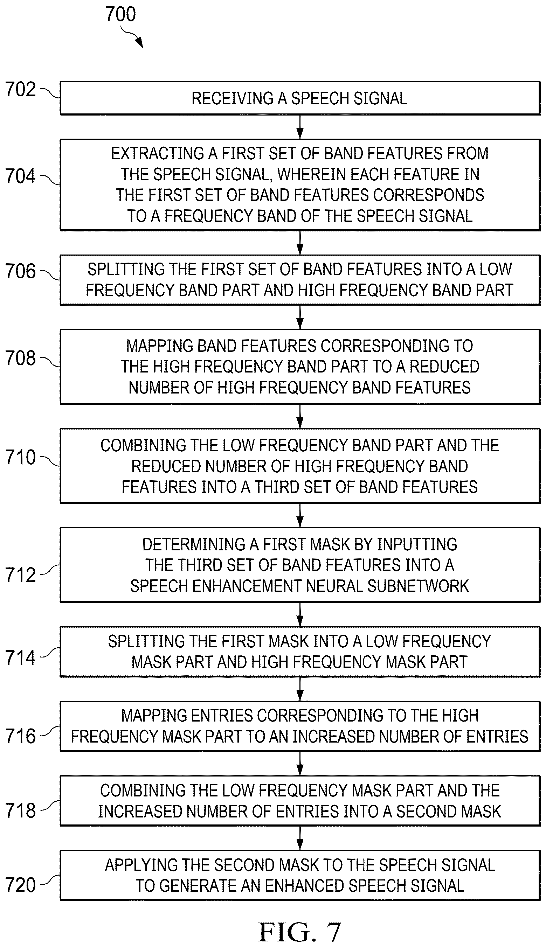

**Fig. 7** is a flowchart of an example of a process 700 of using a neural network for speech enhancement according to embodiments of the disclosure. Process 700 may correspond to the steps performed according to training of the speech enhancement framework in **Fig. 6.** In some implementations, blocks of process 700 may be performed by a playback device. Alternatively, blocks of process 700 may be performed by another device, and the enhanced speech signal may be provided to the playback device.

In S702, process 700 may receive a speech signal. The speech signal may be degraded by any one of noise, reverberation and compression.

In S704, process 700 may extract a first set of band features from the speech signal, wherein each feature in the first set of band features corresponds to a frequency band of the speech signal. To extract the band features, the speech signal may have to be transformed into the frequency domain. The features in the first set of band features may correspond to the complex spectrum values of a corresponding frequency band for the speech signal. The band features may be determined based on grouping bin features of the speech signal.

In S706, process 700 may split the first set of band features into a low frequency band part and high frequency band part.

In S708, process 700 may map band features corresponding to the high frequency band part to a reduced number of high frequency band features. Mapping may be implemented as a weighted sum of subsets of band features in the high frequency band part. The weighted sum of subsets may correspond to optimized weights of a neural subnetwork.

In S710, process 700 may combine the low frequency band part and the reduced number of high frequency band features into a third set of band features.

In S712, process 700 may determine a first mask by inputting the third set of band features into a speech enhancement neural subnetwork. The speech enhancement neural subnetwork may have been trained based on pairs of clean speech and corresponding degraded speech. The first mask may be the output of the speech enhancement neural subnetwork.

In S714, process 700 may split the first mask into a low frequency mask part and high frequency mask part.

In S716, process 700 may map entries corresponding to the high frequency mask part to an increased number of entries. Mapping may be implemented as a weighted sum of subsets of band features in the high frequency band part. The weighted sum of subsets may correspond to optimized weights of a neural subnetwork.

In S718, process 700 may combine the low frequency mask part and the increased number of entries into a second mask.

In S720, process 700 may apply the second mask to the speech signal to generate an enhanced speech signal, i.e., by multiplying the bands of the frequency transformed speech signal with the respective value of the second mask to generate enhanced band features. Generating the enhanced speech signal may further include the application of an inverse frequency transform to the enhanced band features to generate an enhanced version of the speech signal in time domain.

*Interpretation*

A computing device implementing the techniques described above can have the following example architecture. Other architectures are possible, including architectures with more or fewer components. In some implementations, the example architecture includes one or more processors (e.g., dual-core Intel® Xeon® Processors), one or more output devices (e.g., LCD), one or more network interfaces, one or more input devices (e.g., mouse, keyboard, touch-sensitive display) and one or more computer-readable mediums (e.g., RAM, ROM, SDRAM, hard disk, optical disk, flash memory, etc.). These components can exchange communications and data over one or more communication channels (e.g., buses), which can utilize various hardware and software for facilitating the transfer of data and control signals between components.

The term "computer-readable medium" refers to a medium that participates in providing instructions to processor for execution, including without limitation, non-volatile media (e.g., optical or magnetic disks), volatile media (e.g., memory) and transmission media. Transmission media includes, without limitation, coaxial cables, copper wire and fiber optics.

Computer-readable medium can further include operating system (e.g., a Linux® operating system), network communication module, audio interface manager, audio processing manager and live content distributor. Operating system can be multi-user, multiprocessing, multitasking, multithreading, real time, etc. Operating system performs basic tasks, including but not limited to: recognizing input from and providing output to network interfaces and/or devices; keeping track and managing files and directories on computer-readable mediums (e.g., memory or a storage device); controlling peripheral devices; and managing traffic on the one or more communication channels. Network communications module includes various components for establishing and maintaining network connections (e.g., software for implementing communication protocols, such as TCP/IP, HTTP, etc.).

Architecture can be implemented in a parallel processing or peer-to-peer infrastructure or on a single device with one or more processors. Software can include multiple software components or can be a single body of code.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, a browser-based web application, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor or a retina display device for displaying information to the user. The computer can have a touch surface input device (e.g., a touch screen) or a keyboard and a pointing device such as a mouse or a trackball by which the user can provide input to the computer. The computer can have a voice input device for receiving voice commands from the user.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Unless specifically stated otherwise, as apparent from the following discussions, it is appreciated that throughout the present invention discussions utilizing terms such as "processing", "computing", "calculating", "determining", "analyzing" or the like, refer to the action and/or processes of a computer or computing system, or similar electronic computing devices, that manipulate and/or transform data represented as physical, such as electronic, quantities into other data similarly represented as physical quantities.

Reference throughout this invention to "one example embodiment", "some example embodiments" or "an example embodiment" means that a particular feature, structure or characteristic described in connection with the example embodiment is included in at least one example embodiment of the present invention. Thus, appearances of the phrases "in one example embodiment", "in some example embodiments" or "in an example embodiment" in various places throughout this invention are not necessarily all referring to the same example embodiment. Furthermore, the particular features, structures or characteristics may be combined in any suitable manner, as would be apparent to one of ordinary skill in the art from this invention, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted", "connected", "supported", and "coupled" and variations thereof are used broadly and encompass both direct and indirect mountings, connections, supports, and couplings.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the present invention, various features of the present invention are sometimes grouped together in a single example embodiment, Fig., or description thereof for the purpose of streamlining the present invention and aiding in the understanding of one or more of the various inventive aspects. This method of invention, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this invention.

Furthermore, while some example embodiments described herein include some but not other features included in other example embodiments, combinations of features of different example embodiments are meant to be within the scope of the present invention, and form different example embodiments, as would be understood by those skilled in the art. For example, in the following claims, any of the claimed example embodiments can be used in any combination.

In the description provided herein, numerous specific details are set forth. However, it is understood that example embodiments of the present invention may be practiced without these specific details. In other instances, well-known methods, structures and techniques have not been shown in detail in order not to obscure an understanding of this description.

Thus, while there has been described what are believed to be the best modes of the present invention, those skilled in the art will recognize that other and further modifications may be made thereto without departing from the spirit of the present invention, and it is intended to claim all such changes and modifications as fall within the scope of the present invention. For example, any formulas given above are merely representative of procedures that may be used. Functionality may be added or deleted from the block diagrams and operations may be interchanged among functional blocks. Steps may be added or deleted to methods described within the scope of the present disclosure.

## Enumerated Example Embodiments

Various aspects and implementations of the present disclosure may also be appreciated from the following enumerated example embodiments (EEEs), which are not claims.

EEE 1. A method of training a neural network for speech enhancement, the method comprising:

receiving a speech signal and a corresponding reference speech signal;
extracting a first set of band features from the speech signal and a second set of band features from the reference speech signal, wherein each feature in the first set of band features corresponds to a frequency band of the speech signal and each feature in the second set of band features corresponds to a frequency band of the reference speech signal;
splitting the first set of band features into a low frequency band part and high frequency band part;
mapping band features corresponding to the high frequency band part to a reduced number of high frequency band features;
combining the low frequency band part and the reduced number of high frequency band features into a third set of band features;
determining a first mask by inputting the third set of band features into a speech enhancement neural subnetwork;
splitting the first mask into a low frequency mask part and high frequency mask part;
mapping entries corresponding to the high frequency mask part to an increased number of entries;
combining the low frequency mask part and the increased number of entries into a second mask;
determining a fourth set of band features based on the second mask and the speech signal;
evaluating a loss function based on the second set of band features and the fourth set of band features; and
updating weights of the speech enhancement neural subnetwork based on a value of the evaluated loss function.

EEE 2. The method of any one of the previous EEEs, wherein the speech enhancement neural subnetwork is pretrained.

EEE 3. The method of EEE 2, wherein the speech enhancement neural subnetwork is initialized with weights resulting from the pertaining.

EEE 4. The method of EEE 2 or 3, wherein the speech enhancement neural subnetwork is pretrained based on band features corresponding to a pretraining speech signal and a pretraining reference speech signal, wherein the number of band features corresponding to the pretraining speech signal and the pretraining reference speech signal is equal to the number of band features in the third set of band features.

EEE 5. The method of any one of the preceding EEEs, wherein splitting the first set of band features into a low frequency band part and high frequency band part is performed by splitting the frequency bands at a splitting point and assigning the band features corresponding to the frequency bands below the splitting point to the low frequency band part and the band features corresponding to the frequency bands above the splitting point to the high frequency band part.

EEE 6. The method of EEE 5, wherein the splitting point is based on a difference between the number of band features in the first set of band features and the input size of the speech enhancement neural subnetwork.

EEE 7. The method of EEE 6, wherein a number of band features in the low frequency band part is equal to or smaller than N-1, wherein N is the input size of the speech enhancement neural subnetwork.

EEE 8. The method of EEE 7, wherein a number of band features in the high frequency band part is equal to M-x, wherein x is the number of band features in the low frequency band part and M is the total number of band features in the first set of band features.

EEE 9. The method of EEE 8, wherein the reduced number of high frequency band features is equal to N-x.

EEE 10. The method of any one of the preceding EEEs, wherein splitting the first set of band features into a low frequency band part and high frequency band part is based on a first neural subnetwork; and
weights of the first neural subnetwork are updated based on the value of the evaluated loss function.

EEE 11. The method of any one of the preceding EEEs, wherein mapping the band features corresponding to the high frequency band part to the reduced number of high frequency band features comprises:
for each band feature in the reduced number of high frequency band features;

> determine a subset of band features in the high frequency band part; and
> calculate a weighted sum of the subset of band features to determine the band feature in the reduced number of high frequency band features.

EEE 12. The method of any one of the preceding EEEs, wherein mapping the band features corresponding to the high frequency band part to the reduced number of high frequency band features is based on a second neural subnetwork; and
weights of the second neural subnetwork are updated based on the value of the evaluated loss function.

EEE 13. The of method of EEE 12 when dependent on EEE 11, wherein weights of the second neural subnetwork correspond to determination of the subsets of band features and the weights of the weighted sums of the subset of band features.

EEE 14. The method of EEE 12 or 13, wherein the second neural subnetwork is a fully connected layer.

EEE 15. The method of any one of the previous EEEs, wherein splitting the first mask into the low frequency mask part and the high frequency mask part is performed by splitting the entries at a splitting point and assigning the entries corresponding to the frequency bands below the splitting point to the low frequency mask part and the entries corresponding to the frequency band above the splitting point to the high frequency mask part.

EEE 16. The method of EEE 15, wherein a number of entries in the low frequency mask part corresponds to a number of band features in the low frequency band part.

EEE 17. The method of EEE 16 when dependent on EEE 9, wherein a number of entries in the high frequency mask part is equal to N-x.

EEE 18. The method of any one of the preceding EEEs, wherein splitting the first mask into the low frequency mask part and the high frequency mask part is based on a third neural subnetwork; and
weights of the third neural subnetwork are updated based on the value of the evaluated loss function.

EEE 19. The method of EEE 8 or any one of EEEs 9 to 18 when dependent on EEE 8, wherein the increased number of entries is equal to M-x.

EEE 20. The method of any one of the preceding EEEs, wherein mapping the entries corresponding to the high frequency mask part to the increased number of entries comprises:
for each entry in the increased number of entries;

> determine a subset of entries in the high frequency mask part;
> calculate a weighted sum of the subset of entries to determine the entry in the increased number of entries.

EEE 21. The method of any one of the preceding EEEs, wherein mapping the entries corresponding to the high frequency mask part to the increased number of entries is based on a fourth neural subnetwork; and
weights of the fourth neural subnetwork are updated based on the value of the evaluated loss function.

EEE 22. The of method of EEE 21 when dependent on EEE 20, wherein weights of the fourth neural subnetwork correspond to determination of the subsets of entries and the weights of the weighted sums of the subset of entries.

EEE 23. The method of EEE 21 or 22, wherein the fourth neural subnetwork is a fully connected layer.

EEE 24. The method according to any one of the previous EEEs, wherein the speech signal comprises speech that is degraded by one or more of noise, reverberation, compression and decompression.

EEE 25. The method according to any one of the previous EEEs, wherein extracting the first set of band features from the speech signal and the second set of band feature from the reference speech signal comprises:

transforming the speech signal into the frequency domain to obtain a transformed speech signal;

transforming the reference speech signal into the frequency domain to obtain a transformed reference speech signal;

extracting a first feature from the transformed speech signal for each frequency bin in the frequency domain;

extracting a second feature from the transformed reference speech signal for each frequency bin in the frequency domain;

splitting the frequency domain into a plurality of frequency bands;

for each frequency band in the plurality of frequency bands,

combining first features corresponding to frequency bins inside the frequency band to obtain the first set of band features; and

combining second features corresponding to frequency bins inside the frequency band to obtain the second set of band features.

EEE 26. The method of EEE 25, wherein transforming the speech signal or the reference speech signal into the frequency domain is performed by any one of a short time Fourier transform, STFT, a modified discrete cosine transform, MDCT, a shifted discrete frequency transform, MDXT, or a filter bank based transform.

EEE 27. The method of EEEs 25 or 26, wherein combining first features corresponding to frequency bins inside a frequency band to obtain the first set of band features comprises weighting the first features corresponding to frequency bins inside the frequency band.

EEE 28. The method of any one of the preceding EEEs, wherein width and spacing of frequency bands are perceptually motivated.

EEE 29. The method of EEE 28, wherein frequency bands are equally spaced in Mel frequency.

EEE 30. The method of any one of EEEs 1 to 29, wherein each feature in the first set of band features and each feature in the second set of band features corresponds to any one of a Mel-frequency band power, Bark Scale band power, log- frequency band power or equivalent rectangular bandwidth, ERB, band power.

EEE 31. The method of any one of the previous EEEs, wherein combining the low frequency band part and the reduced number of high frequency band features into the third set of band features comprises stacking band features corresponding to the low frequency band part and band features corresponding to the reduced number of high frequency band features to generate the third set of band features.

EEE 32. The method of any one of the previous EEEs, wherein the first mask is the output of the speech enhancement neural subnetwork.

EEE 33. The method of any one of the previous EEEs, wherein the speech enhancement neural subnetwork is a deep neural network, DNN.

EEE 34. The method of EEE 33, wherein the DNN comprises a feature extraction module, followed by an encoder module, followed by a decoder module, and a CNN layer.

EEE 35. The method of EEE 34, wherein the encoder module comprises at least one down-sample layer and a plurality of CNN layers, and wherein the decoder module comprises at least one up-sample layer and a plurality of CNN layers.

EEE 36. The method of any one of the preceding EEEs, wherein the first and second mask comprise a value indicating an amount of speech present in each frequency band of the corresponding speech signal.

EEE 37. The method of EEE 36, wherein the value indicating an amount of speech present in each frequency band of the corresponding speech signal is a ratio of speech to speech plus noise in the respective frequency band.

EEE 38. The method of EEE 7 or any of EEEs 8 to 37 when dependent on EEE 7, wherein a number of entries in the first mask is equal to N.

EEE 39. The method of any one of the previous EEEs, combining the low frequency mask part and the increased number of entries into the second mask comprises stacking entries corresponding to the low frequency mask part and entries corresponding to the increased number of entries to generate the second mask.

EEE 40. The method of EEE 39, wherein generating the second mask further comprises smoothing the stacked entries.

EEE 41. The method of EEE 40, wherein smoothing the stacked entries is performed by a smoothing neural subnetwork comprising a convolutional neural network, CNN layer, followed by a batch norm layer, followed by an activation layer, wherein weights of the smoothing neural subnetwork are updated based on the value of the evaluated loss function.

EEE 42. The method of EEE 8 or any one of EEEs 9 to 41 when dependent on EEE 8, wherein a number of entries in the second mask is equal to M.

EEE 43. The method of EEE 25 or EEEs 26 to 42 when dependent on EEE 25, wherein determining the fourth set of band features based on the second mask and the speech signal comprises applying the second mask to the transformed speech signal and extracting the fourth set of band features from the transformed speech signal after the second mask has been applied.

EEE 44. The method of EEE 43, wherein applying the second mask to the transformed speech signal comprises multiplying, for each frequency band, the value of the second mask with the transformed speech signal.

EEE 45. The method of EEE 43 or 44, wherein each feature in the fourth set of band features corresponds to a frequency band of the transformed speech signal with the second mask applied.

EEE 46. The method of any one of the preceding EEEs, wherein the loss function is based on a difference between the second set of features and the fourth set of features.

EEE 47. A neural network-based method for speech enhancement of a speech signal, the method comprising:

receiving a speech signal;
extracting a first set of band features from the speech signal, wherein each feature in the first set of band features corresponds to a frequency band of the speech signal;
splitting the first set of band features into a low frequency band part and high frequency band part;
mapping band features corresponding to the high frequency band part to a reduced number of high frequency band features;
combining the low frequency band part and the reduced number of high frequency band features into a third set of band features;
determining a first mask by inputting the third set of band features into a trained speech enhancement neural subnetwork;
splitting the first mask into a low frequency mask part and high frequency mask part;
mapping entries corresponding to the high frequency mask part to an increased number of entries;
combining the low frequency mask part and the increased number of values into a second mask; and
applying the second mask to the speech signal to generate an enhanced speech signal.

EEE 48. The method of EEE 47, wherein the trained speech enhancement neural subnetwork has been trained separately with first training pairs with a size equal to a number of band features in the third set of band features and consecutively trained with second training pairs of a size equal to a number of band features in the first set of band features according to any one of EEEs 1 to 46.

EEE 49. The method of EEE 47 or 48, wherein splitting the first set of band features into a low frequency band part and high frequency band part is performed by splitting the frequency bands at a splitting point and assigning the band features corresponding to the frequency bands below the splitting point to the low frequency band part and the band features corresponding to the frequency band above the splitting point to the high frequency band part.

EEE 50. The method of EEE 49, wherein the splitting point is based on a difference between the number of band features in the first set of band features and the input size of the trained speech enhancement neural subnetwork.

EEE 51. The method of EEE 50, wherein a number of band features in the low frequency band part is equal to or smaller than N-1, wherein N is the input size of the trained speech enhancement neural subnetwork.

EEE 52. The method of EEE 51, wherein a number of band features in the high frequency band part is equal to M-x, wherein x is the number of band features in the low frequency band part and M is the total number of band features in the first set of band features.

EEE 53. The method of any one of EEEs 47 to 52, wherein splitting the first set of band features into a low frequency band part and high frequency band part is based on a trained first neural subnetwork.

EEE 54. The method of EEE 52, wherein the reduced number of high frequency band features is equal to N-x.

EEE 55. The method of any one of EEEs 47 to 54, wherein mapping the band features corresponding to the high frequency band part to the reduced number of high frequency band features comprises:

for each band feature in the reduced number of high frequency band features;

determine a subset of band features in the high frequency band part; and
calculate a weighted sum of the subset of band features to determine the band feature in the reduced number of high frequency band features.

EEE 56. The method of any one of EEEs 47 to 55, wherein mapping the band features corresponding to the high frequency band part to the reduced number of high frequency band features is based on a trained second neural subnetwork.

EEE 57. The of method of EEE 56 when dependent on EEE 55, wherein weights of the trained second neural subnetwork correspond to determination of the subsets of band features and the weights of the weighted sums of the subset of band features.

EEE 58. The method of EEE 56 or 57, wherein the trained second neural subnetwork is a fully connected layer.

EEE 59. The method of any one of EEEs 47 to 58, wherein combining the low frequency band part and the reduced number of high frequency band features into the third set of band features comprises stacking band features corresponding to the low frequency band part and band features corresponding to the reduced number of high frequency band features to generate the third set of band features.

EEE 60. The method of any one of EEEs 47 to 59, wherein splitting the first mask into the low frequency mask part and the high frequency mask part is performed by splitting the entries at a splitting point and assigning the entries corresponding to the frequency bands below the splitting point to the low frequency mask part and the entries corresponding to the frequency band above the splitting point to the high frequency mask part.

EEE 61. The method of EEE 60, wherein a number of entries in the low frequency mask part corresponds to a number of band features in the low frequency band part.

EEE 62. The method of EEE 61 when dependent on EEE 54, wherein a number of entries in the high frequency mask part is equal to N-x.

EEE 63. The method of any one of EEEs 47 to 62, wherein splitting the first mask into the low frequency mask part and the high frequency mask part is based on a third neural subnetwork; and
weights of the third neural subnetwork are updated based on the value of the evaluated loss function.

EEE 64. The method of EEE 52 or any one of EEEs 53 to 63 when dependent on EEE 52, wherein the increased number of entries is equal to M-x.

EEE 65. The method of any one of EEEs 47 to 64, wherein mapping the entries corresponding to the high frequency mask part to the increased number of entries comprises:
for each entry in the increased number of entries;

determine a subset of entries in the high frequency mask part;
calculate a weighted sum of the subset of entries to determine the entry in the increased number of entries.

EEE 66. The method of any one of EEEs 47 to 65, wherein mapping the entries corresponding to the high frequency mask part to the increased number of entries is based on a trained fourth neural subnetwork.

EEE 67. The of method of EEE 66 when dependent on EEE 65, wherein weights of the trained fourth neural subnetwork correspond to determination of the subsets of entries and the weights of the weighted sums of the subset of entries.

EEE 68. The method of EEE 66 or 67, wherein the fourth neural subnetwork is a fully connected layer.

EEE 69. The method of any one of EEEs 47 to 68, combining the low frequency mask part and the increased number of entries into the second mask comprises stacking entries corresponding to the low frequency mask part and entries corresponding to the increased number of entries to generate the second mask.

EEE 70. The method of EEE 69, wherein generating the second mask further comprises smoothing the stacked entries.

EEE 71. The method of EEE 70, wherein smoothing the stacked entries is performed by a smoothing neural subnetwork comprising a convolutional neural network, CNN layer, followed by a batch norm layer, followed by an activation layer, wherein weights of the smoothing neural subnetwork are updated based on the value of the evaluated loss function.

EEE 72. The method of any one of EEEs 47 to 71, wherein the speech signal comprises speech that is degraded by one or more of noise, reverberation, compression and decompression.

EEE 73. The method of any one of EEEs 47 to 72, wherein extracting the first set of band features from the speech signal comprises:

transforming the speech signal into the frequency domain to obtain a transformed speech signal;
extracting a first feature from the transformed speech signal for each frequency bin in the frequency domain;
splitting the frequency domain into a plurality of frequency bands; and
for each frequency band in the plurality of frequency bands,
combining first features corresponding to frequency bins inside the frequency band to obtain the first set of band features.

EEE 74. The method of EEE 73, wherein transforming the speech signal into the frequency domain is performed by any one of a short time Fourier transform, STFT, a modified discrete cosine transform, MDCT, a shifted discrete frequency transform, MDXT, or a filter bank based transform.

EEE 75. The method of EEEs 73 or 74, wherein combining first features corresponding to frequency bins inside a frequency band to obtain the first set of band features comprises weighting the first features corresponding to frequency bins inside the frequency band.

EEE 76. The method of any one of EEEs 47 to 75, wherein width and spacing of frequency bands are perceptually motivated.

EEE 77. The method of EEE 76, wherein frequency bands are equally spaced in Mel frequency.

EEE 78. The method of any one of EEEs 47 to 77, wherein each feature in the first set of band features and each feature in the second set of band features corresponds to any one of a Mel-frequency band power, Bark Scale band power, log- frequency band power or equivalent rectangular bandwidth, ERB, band power.

EEE 79. The method of any one of EEEs 47 to 78, wherein the first mask is the output of the trained speech enhancement neural subnetwork.

EEE 80. The method of any one of EEEs 47 to 79, wherein trained speech enhancement neural subnetwork is a deep neural network, DNN.

EEE 81. The method of EEE 80, wherein the DNN comprises a feature extraction module, followed by an encoder module, followed by a decoder module, and a CNN layer.

EEE 82. The method of EEE 81, wherein the encoder module comprises at least one down-sample layer and a plurality of CNN layers, and wherein the decoder module comprises at least one up-sample layer and a plurality of CNN layers.

EEE 83. The method of any one of EEEs 47 to 82, wherein the first and second mask comprises a value indicating an amount of speech present in each frequency band of the corresponding speech signal.

EEE 84. The method of EEE 83, wherein the value indicating an amount of speech present in each frequency band of the corresponding speech signal is a ratio of speech to speech plus noise in the respective frequency band.

EEE 85. The method of EEE 51 or any of EEEs 52 to 84 when dependent on EEE 51, wherein a number of entries in the first mask is equal to N.

EEE 86. The method of EEE 52 or any one of EEEs 53 to 85 when dependent on EEE 52, wherein a number of entries in the second mask is equal to M.

EEE 87. The method of EEE 73 or EEEs 74 to 86 when dependent on EEE 73, wherein applying the second mask to the speech signal to generate the enhanced speech signal comprises applying the second mask to the transformed speech signal.

EEE 88. The method of EEE 87, wherein applying the second mask to the transformed speech signal comprises multiplying, for each frequency band, the value of the second mask with the transformed speech signal.

EEE 89. The method of EEE 87 or 88, wherein the transformed speech signal is transformed to the time domain after applying the second mask to generate the enhanced speech signal.

EEE 90. The method of any one of EEEs 47 to 89, wherein the method is performed on a frame of the speech signal.

EEE 91. An apparatus, comprising a processor and a memory coupled to the processor, wherein the processor is adapted to carry out the method according to any one of EEEs 1 to 90.

EEE 92. A computer program comprising instructions that, when executed by a processor, cause the processor to carry out the method according to any one of EEEs 1 to 90.

EEE 93. A computer-readable storage medium storing the computer program according to EEE 92.

**Claims**

1. A neural network-based method for speech enhancement of a speech signal, the method comprising:

   receiving a speech signal;
   extracting a first set of band features from the speech signal, wherein each feature in the first set of band features corresponds to a frequency band of the speech signal;
   splitting the first set of band features into a low frequency band part and high frequency band part;
   mapping band features corresponding to the high frequency band part to a reduced number of high frequency band features;
   combining the low frequency band part and the reduced number of high frequency band features into a third set of band features;
   determining a first mask by inputting the third set of band features into a trained speech enhancement neural subnetwork;
   splitting the first mask into a low frequency mask part and high frequency mask part;
   mapping entries corresponding to the high frequency mask part to an increased number of entries;
   combining the low frequency mask part and the increased number of values into a second mask; and
   applying the second mask to the speech signal to generate an enhanced speech signal.

2. The method of claim 1, wherein the trained speech enhancement neural subnetwork has been trained separately with first training pairs with a size equal to a number of band features in the third set of band features and consecutively trained with second training pairs of a size equal to a number of band features in the first set of band features according to any one of claims 7 to 12.

3. The method of claim 1 or 2, wherein splitting the first set of band features into a low frequency band part and high frequency band part is performed by splitting the frequency bands at a splitting point and assigning the band features corresponding to the frequency bands below the splitting point to the low frequency band part and the band features corresponding to the frequency band above the splitting point to the high frequency band part.

4. The method of any one of the preceding claims, wherein splitting the first set of band features into a low frequency band part and high frequency band part is based on a trained first neural subnetwork.

5. The method of any one of the preceding claims, wherein mapping the band features corresponding to the high frequency band part to the reduced number of high frequency band features comprises:
   for each band feature in the reduced number of high frequency band features;

   determine a subset of band features in the high frequency band part; and
calculate a weighted sum of the subset of band features to determine the band feature in the reduced number of high frequency band features.

6.  The method of any one of the preceding claims, wherein mapping the band features corresponding to the high frequency band part to the reduced number of high frequency band features is based on a trained second neural subnetwork.

7.  A method of training a neural network for speech enhancement, the method comprising:

    receiving a speech signal and a corresponding reference speech signal;
    extracting a first set of band features from the speech signal and a second set of band features from the reference speech signal, wherein each feature in the first set of band features corresponds to a frequency band of the speech signal and each feature in the second set of band features corresponds to a frequency band of the reference speech signal;
    splitting the first set of band features into a low frequency band part and high frequency band part;
    mapping band features corresponding to the high frequency band part to a reduced number of high frequency band features;
    combining the low frequency band part and the reduced number of high frequency band features into a third set of band features;
    determining a first mask by inputting the third set of band features into a speech enhancement neural subnetwork;
    splitting the first mask into a low frequency mask part and high frequency mask part;
    mapping entries corresponding to the high frequency mask part to an increased number of entries;
    combining the low frequency mask part and the increased number of entries into a second mask;
    determining a fourth set of band features based on the second mask and the speech signal;
    evaluating a loss function based on the second set of band features and the fourth set of band features; and
    updating weights of the speech enhancement neural subnetwork based on a value of the evaluated loss function.

8.  The method of any one of the previous claims, wherein the speech enhancement neural subnetwork is pretrained.

9.  The method of claim 8, wherein the speech enhancement neural subnetwork is initialized with weights resulting from the pretraining.

10. The method of claim 8 or 9, wherein the speech enhancement neural subnetwork is pretrained based on band features corresponding to a pretraining speech signal and a pretraining reference speech signal, wherein the number of band features corresponding to the pretraining speech signal and the pretraining reference speech signal is equal to the number of band features in the third set of band features.

11. The method of any one of claims 7 to 10, wherein splitting the first set of band features into a low frequency band part and high frequency band part is performed by splitting the frequency bands at a splitting point and assigning the band features corresponding to the frequency bands below the splitting point to the low frequency band part and the band features corresponding to the frequency bands above the splitting point to the high frequency band part.

12. The method of any one of claims 7 to 11, wherein splitting the first set of band features into a low frequency band part and high frequency band part is based on a first neural subnetwork; and
    weights of the first neural subnetwork are updated based on the value of the evaluated loss function.

13. An apparatus, comprising a processor and a memory coupled to the processor, wherein the processor is adapted to carry out the method according to any one of claims 1 to 12.

14. A computer program comprising instructions that, when executed by a processor, cause the processor to carry out the method according to any one of claims 1 to 12.

15. A computer-readable storage medium storing the computer program according to claim 14.

FIG. 1

EP 4 756 802 A1

FIG. 2

300

INPUT FEATURES

301 — | FEATURE EXTRACTION MODULE |

302 — | ENCODER MODULE |

303 — | DECODER MODULE |

304 — | CNN LAYER |

| MASK 1 | | MASK 2 |

FIG. 3

FIG. 4

500

| 502 | RECEIVING A SPEECH SIGNAL AND A CORRESPONDING REFERENCE SPEECH SIGNAL |
|---|---|

| 504 | EXTRACTING A FIRST SET OF BAND FEATURES FROM THE SPEECH SIGNAL AND A SECOND SET OF BAND FEATURES FROM THE REFERENCE SPEECH SIGNAL, WHEREIN EACH FEATURE IN THE FIRST SET OF BAND FEATURES CORRESPONDS TO A FREQUENCY BAND OF THE SPEECH SIGNAL AND EACH FEATURE IN THE SECOND SET OF BAND FEATURES CORRESPONDS TO A FREQUENCY BAND OF THE REFERENCE SPEECH SIGNAL |
|---|---|

| 506 | SPLITTING THE FIRST SET OF BAND FEATURES INTO A LOW FREQUENCY BAND PART AND HIGH FREQUENCY BAND PART |
|---|---|

| 508 | MAPPING BAND FEATURES CORRESPONDING TO THE HIGH FREQUENCY BAND PART TO A REDUCED NUMBER OF HIGH FREQUENCY BAND FEATURES |
|---|---|

| 510 | COMBINING THE LOW FREQUENCY BAND PART AND THE REDUCED NUMBER OF HIGH FREQUENCY BAND FEATURES INTO A THIRD SET OF BAND FEATURES |
|---|---|

| 512 | DETERMINING A FIRST MASK BY INPUTTING THE THIRD SET OF BAND FEATURES INTO A SPEECH ENHANCEMENT NEURAL SUBNETWORK |
|---|---|

| 514 | SPLITTING THE FIRST MASK INTO A LOW FREQUENCY MASK PART AND HIGH FREQUENCY MASK PART |
|---|---|

| 516 | MAPPING ENTRIES CORRESPONDING TO THE HIGH FREQUENCY MASK PART TO AN INCREASED NUMBER OF ENTRIES |
|---|---|

| 518 | COMBINING THE LOW FREQUENCY MASK PART AND THE INCREASED NUMBER OF ENTRIES INTO A SECOND MASK |
|---|---|

| 520 | DETERMINING A FOURTH SET OF BAND FEATURES BASED ON THE SECOND MASK AND THE SPEECH SIGNAL |
|---|---|

| 522 | EVALUATING A LOSS FUNCTION BASED ON THE SECOND SET OF BAND FEATURES AND THE FOURTH SET OF BAND FEATURES |
|---|---|

| 524 | UPDATING WEIGHTS OF THE SPEECH ENHANCEMENT NEURAL SUBNETWORK BASED ON A VALUE OF THE EVALUATED LOSS FUNCTION |
|---|---|

FIG. 5

FIG. 6

SPEECH → BAND FEATURE EXTRACTION (601) → BAND FEATURES →

HIGH SAMPLE RATE MODEL

FEATURE REDUCTION (602)

REDUCED NUMBER OF BAND FEATURES

LOW SAMPLE RATE MODEL

SPEECH ENHANCEMENT NEURAL SUBNETWORK (603)

BAND MASK

FEATURE INCREASRE (604)

BAND MASK WITH INCREASED NUMBER OF ENTRIES

ENHANCEMENT (605)

ENHANCED SPEECH

600

700

702 — RECEIVING A SPEECH SIGNAL

704 — EXTRACTING A FIRST SET OF BAND FEATURES FROM THE SPEECH SIGNAL, WHEREIN EACH FEATURE IN THE FIRST SET OF BAND FEATURES CORRESPONDS TO A FREQUENCY BAND OF THE SPEECH SIGNAL

706 — SPLITTING THE FIRST SET OF BAND FEATURES INTO A LOW FREQUENCY BAND PART AND HIGH FREQUENCY BAND PART

708 — MAPPING BAND FEATURES CORRESPONDING TO THE HIGH FREQUENCY BAND PART TO A REDUCED NUMBER OF HIGH FREQUENCY BAND FEATURES

710 — COMBINING THE LOW FREQUENCY BAND PART AND THE REDUCED NUMBER OF HIGH FREQUENCY BAND FEATURES INTO A THIRD SET OF BAND FEATURES

712 — DETERMINING A FIRST MASK BY INPUTTING THE THIRD SET OF BAND FEATURES INTO A SPEECH ENHANCEMENT NEURAL SUBNETWORK

714 — SPLITTING THE FIRST MASK INTO A LOW FREQUENCY MASK PART AND HIGH FREQUENCY MASK PART

716 — MAPPING ENTRIES CORRESPONDING TO THE HIGH FREQUENCY MASK PART TO AN INCREASED NUMBER OF ENTRIES

718 — COMBINING THE LOW FREQUENCY MASK PART AND THE INCREASED NUMBER OF ENTRIES INTO A SECOND MASK

720 — APPLYING THE SECOND MASK TO THE SPEECH SIGNAL TO GENERATE AN ENHANCED SPEECH SIGNAL

FIG. 7

# EUROPEAN SEARCH REPORT

**Application Number**

EP 25 22 1758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU QINWEN ET AL: "Learnable spectral dimension compression mapping for full-band speech enhancement", NTT COMMUNICATION SCIENCE LABORATORIES, NIPPON TELEGRAPH AND TELEPHONE CORPORATION, ATSUGI, KANAGAWA 243-0198, JAPAN ? KENJI.ISHIKAWA.MP@HCO.NTT.CO.JP , YOSHIFUMI.SHIRAKI.YA@HCO.NTT.CO.JP , TAKEHIRO.MORIYA.VN@HCO.NTT.CO.JP, vol. 3, no. 2, 21 February 2023 (2023-02-21), page 025204, XP093383462, ISSN: 2691-1191, DOI: 10.1121/10.0017327 | 1,3, 6-11, 13-15 | INV. G10L21/0232 |
| A | * the whole document * ----- | 2,4,5,12 | |
| A | US 2022/369031 A1 (LESTER MICHAEL [US] ET AL) 17 November 2022 (2022-11-17) * paragraph [0085] - paragraph [0144]; figures 1-6 * ----- | 1-15 | |
| A | US 2020/066296 A1 (SARGSYAN STEPAN [AM] ET AL) 27 February 2020 (2020-02-27) * paragraph [0035]; figures 9-10 * * paragraph [0071] - paragraph [0072] * ----- | 1-15 | **TECHNICAL FIELDS SEARCHED (IPC)** G10L |

The present search report has been drawn up for all claims

| Place of search | Date of completion of the search | Examiner |
|---|---|---|
| The Hague | 2 April 2026 | De Meuleneire, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1758

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | | Publication date | Patent family member(s) | | Publication date |
|---|---|---|---|---|---|
| US 2022369031 | A1 | 17-11-2022 | CN | 117136407 A | 28-11-2023 |
| | | | EP | 4298630 A1 | 03-01-2024 |
| | | | US | 2022369031 A1 | 17-11-2022 |
| | | | WO | 2022182850 A1 | 01-09-2022 |
| US 2020066296 | A1 | 27-02-2020 | US | 2020066296 A1 | 27-02-2020 |
| | | | WO | 2020041497 A1 | 27-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024137910 W
- US 63783004